# EUROPÄISCHE PATENTSCHRIFT

(11) **EP 0 883 363 B1**
(45) Veröffentlichungstag und Bekanntmachung des Hinweises auf die Patenterteilung: **03.11.1999**
(21) Anmeldenummer: 97901507.0
(22) Anmeldetag: 07.02.1997
(51) Int. Cl.: A47F 5/10, B62B 3/02, F16B 9/02

(54) **STÄNDERPLATTE ZUR WARENPRÄSENTATION**
SUPPORT PLATE FOR EXHIBITING OF GOODS
PLAQUE A MONTANTS POUR PRESENTATION D'ARTICLES

(30) Priorität: 22.02.1996 DE 29603221 U
(43) Veröffentlichungstag der Anmeldung: 16.12.1998
(73) Patentinhaber: Fehlbaum & Co., CH-4132 Muttenz (CH)
(72) Erfinder: WALTER, Herbert, D-79379 Müllheim (DE)
(74) Vertreter: Ullrich, Gerhard, Dr.
(86) Internationale Anmeldenummer: CH9700038
(87) Internationale Veröffentlichungsnummer: WO9730615

(56) Entgegenhaltungen:
- EP-A- 0 667 307
- DE-A- 3 821 049
- FR-A- 1 293 293
- US-A- 3 730 109
- US-A- 4 989 519

## Beschreibung

### Anwendungsgebiet der Erfindung

Die vorliegende Erfindung betrifft eine zur Warenpräsentation konzipierte, mit Steckhülsen bestückte Grundplatte, wobei in die Steckhülsen Vertikalstützen eingesteckt sind. An den Vertikalstützen befinden sich Hängeelemente für das Anhängen der zu präsentierenden Waren.

Für die Darbietung von Waren in Verkaufseinrichtungen oder auf Messen stehen vielfältig gestaltete Tische, Vitrinen, Podeste, Regale oder Präsentationswände zur Verfügung. Eine weitere Möglichkeit ist, die vorzuführenden Waren an einem Ständer - dieser kann feststehend oder verfahrbar sein - aufzuhängen. Derartige Ständer können einen Mittelfuss, stützende Seitenteile oder ein sonstiges Gestell aufweisen. Eine weitere Konstruktionsvariante beruht auf einer bodennah angeordneten Grundplatte, in die Stützen eingesetzt sind, an denen die zu präsentierenden Waren an Hakenelementen oder auf Bügeln hängen. Mit dem zuletzt genannten Typ von Vorrichtungen zur Warenpräsentation befasst sich die vorliegende Erfindung.

### Stand der Technik

Eine Ständerplatte zur Warenpräsentation dieser Art ist aus der französischen Patentschrift FR-A-1 293 293 bekannt. Die beliebig zugeschnittene, in Bodennähe und parallel zum Boden angeordnete Grundplatte ist systematisch mit einer Vielzahl von Steckhülsen bestückt. Die Steckhülsen sind in die Grundplatte eingesetzt und zur Aufnahme von darin einsteckbaren Vertikalstützen vorgesehen. Zuoberst besitzt die einzelne Steckhülse einen erweiterten Kragen, der auf die Oberseite der Grundplatte aufsetzt. Unten weist die Steckhülse einen Aussengewindeabschnitt auf, welcher die Grundplatte durchragt. Auf diesen Aussengewindeabschnitt wird eine Mutter gegen die Unterseite der Grundplatte aufgeschraubt und die Steckhülse somit in der Grundplatte fixiert. Der Durchgang durch die Steckhülse verjüngt sich nach unten konisch. Das untere Ende der in die Steckhülse einsteckbaren, stangenförmigen Vertikalstütze ist ebenfalls konisch ausgebildet. Die Konizitäten im Innern der Steckhülse und an der Vertikalstütze bewirken einen festen, spielfreien Stand der Vertikalstütze in der Steckhülse.

Die insoweit bekannte Einheit aus Steckhülse und Vertikalstütze hat den Nachteil, dass die Steckhülsen mit ihrem Kragen an der Oberseite der Grundplatte aufsetzen, was optisch störende Absätze ergibt, oder aber es erforderlich macht, die Kragen in der Grundplatte zu versenken. Dies führt neben dem Arbeitsaufwand zu einer Materialschwächung. Nachteilig ist ferner, dass die Vertikalstütze ungesichert gegen Verdrehen und Herausziehen in der Steckhülse eingesetzt ist. Schliesslich ist die Steckhülse nicht zugleich als Basis für das Ansetzen eines Fusselementes - z.B. einer Rolle - geeignet.

### Aufgabe der Erfindung

Angesichts der bestehenden, konstruktiven Unvollkommenheiten der existenten Ständerplatte und seiner Bauelemente liegt der Erfindung das Problem zugrunde, eine verbesserte Ständerplatte mit einer Steckhülse und einer komplementären Vertikalstütze zu schaffen. Dabei kommt es darauf an, einen einfachen Einbau der Steckhülse zu ermöglichen, die eingesetzte Vertikalstütze schnell umstecken zu können und dabei einen stabilen Stand der Vertikalstütze zu gewährleisten. Ferner soll sich die gesamte Ständerplatte mit effizienten Kosten herstellen lassen und allen ästhetischen Ansprüchen im Ladenbau genügen.

### Wesen der Erfindung

Die prinzipiellen Merkmale bestehen darin, dass eine in Durchgangsbohrungen, die in der Grundplatte angeordnet sind, eingesetzte Steckhülse vorgesehen ist, wobei die Steckhülse einen an der Unterseite der Grundplatte angeschraubten Flansch aufweist und der Hülsenabschnitt die Durchgangsbohrung bis zur Oberfläche der Grundplatte durchragt. Auch unterhalb des Flansches setzt sich das Hülsenstück bis zum Boden fort. Innerlich verengt sich das Hülsenstück konisch in Richtung zum Boden. Zentrisch im Boden befindet sich eine Gewindebohrung zur Befestigung eines Fusselements für die gesamte Ständerplatte. Auch könnte vorgesehen sein, diese Gewindebohrung zur Fixierung der eingesteckten Vertikalstütze zu nutzen, wenn man die Vertikalstütze zuunterst mit einem Boden ausstattet, wo eine Verschraubung ansetzt.

Innerhalb der Steckhülse, an der Wandung der konischen Bohrung, befindet sich eine zum Boden hin erstreckende, erhabene Nase. Diese Nase dient beim Einstecken der Vertikalstütze zur Bestimmung der Drehstellung der Vertikalstütze sowie als Verdrehsicherung. Die Vertikalstütze besitzt ein in die Steckhülse passendes, konisches Steckende. Am Steckende ist in der Wandung der Vertikalstütze zumindest eine zu der Nase komplementäre, nach unten offene Nut vorgesehen.

### Zeichnungen und Ausführungsbeispiel

Anhand der beiliegenden Zeichnungen erfolgt nachstehend die detaillierte Beschreibung eines Ausführungsbeispiels der erfindungsgemässen Ständerplatte. Es zeigen:

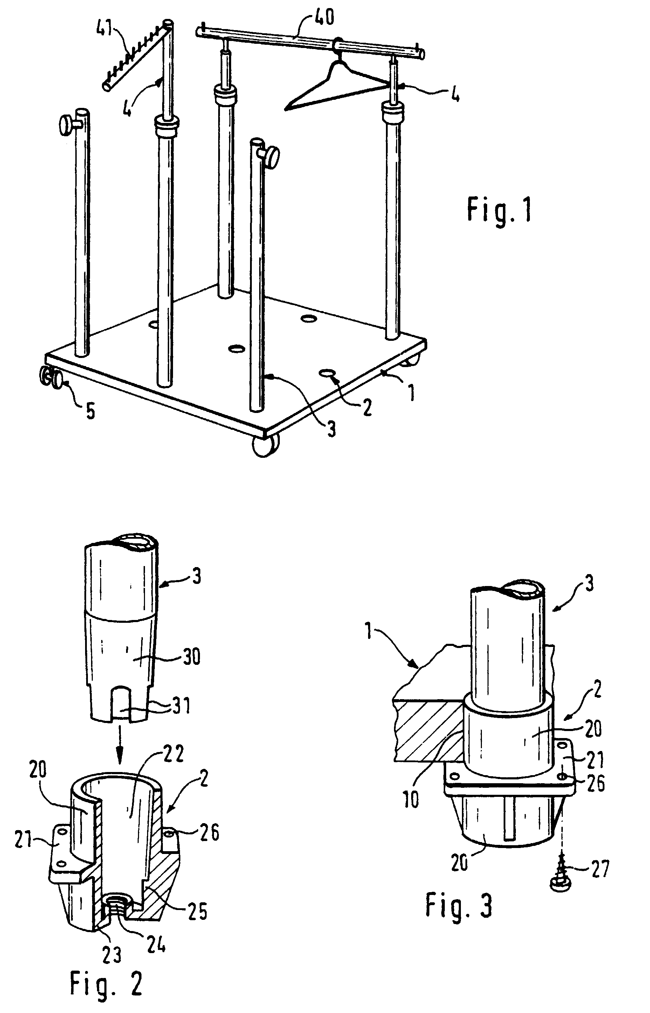

- Figur 1:: die Gesamtansicht der Ständerplatte mit verschiedenen Hängeelementen bestückten Vertikalstützen;
- Figur 2:: die Steckhülse mit angenäherter Vertikalstütze im Teilschnitt und
- Figur 3:: eine in die Grundplatte eingesetzte Steckhülse mit eingesteckter Vertikalstütze im Teilschnitt.

### Figur 1

Die komplette Ständerplatte besteht aus der bodennah angeordneten Grundplatte **1**, in die eine Vielzahl systematisch verteilter Steckhülsen **2** eingesetzt ist sowie aus in einige der Steckhülsen **2** eingesteckten Vertikalstützen **3** mit verschiedenen Aufsätzen **4** - hier in Form einer zwischen zwei Vertikalstützen **3** sich erstreckenden Querstange **40** oder eines abgewinkelten Tragarms **41**. Unter der Grundplatte **1** sind Füsse **5** - hier als Rollen - angebracht. Einige Steckhülsen **2** sind momentan unbelegt. Je nach der zu präsentierenden Warenart und den gestalterischen Vorstellungen kann die Grundplatte **1** mit Steckhülsen **2** bestückt werden. In der späteren Anwendung steht ein Feld von Steckhülsen **2** zur Verfügung, welches entsprechend den Erfordernissen mit Vertikalstützen **3** und gewünschten Aufsätzen **4** ausrüstbar ist.

### Figuren 2 und 3

Die Steckhülse **2** besteht aus dem zylindrischen Hülsenstück **20** und dem dieses äusserlich, radial umgebenden Flansch **21**, der zum Anschrauben an der Unterseite der Grundplatte **1** vorgesehen ist. Der Flansch **21** befindet sich etwa in der Mitte des Hülsenstücks **20**. Im Flansch **21** befinden sich mehrere, radial verteilte Bohrungen **26** um mittels durchdringender Schrauben **27** die Steckhülse **2** an der Unterseite der Grundplatte **1** anzuschrauben. Der obere Teil des Hülsenstücks **20** durchragt eine in die Grundplatte **1** eingearbeitete Durchgangsbohrung **10** und schliesst mit der Oberseite der Grundplatte **1** ab. Der untere Teil des Hülsenstücks **20** ist senkrecht zum Boden hin gerichtet.

Von oben erstreckt sich in das Hülsenstück **20** eine bis zum Hülsenboden **23** reichende, sich abwärts konisch verengende, sacklochförmige Konusbohrung **22**. Zentrisch im Hülsenboden **23** befindet sich eine Gewindebohrung **24** zur Befestigung eines Fusses für die gesamte Ständerplatte. Diese Gewindebohrung **24** ist auch zur Fixierung der eingesteckten Vertikalstütze **3** nutzbar, wenn man an der Vertikalstütze **3**, zuunterst an deren Steckende **30**, ein Element vorsieht, an dem eine Verschraubung ansetzen kann.

Innerhalb der Steckhülse **2**, an der Wandung der Konusbohrung **22**, befindet sich eine zum Hülsenboden **23** hin erstreckende, erhabene Nase **25**. Diese Nase **25** dient beim Einstecken der Vertikalstütze **3** zur Festlegung bestimmter Drehstellungen der Vertikalstütze **3** sowie als Verdrehsicherung. Unten an der Vertikalstütze **3** befindet sich das in die Steckhülse **2** einsetzbare, konische Steckende **30**. An diesem Steckende **30** ist in der Wandung zumindest eine zur Nase **25** komplementäre, nach unten offene Nut **31** vorgesehen. Um mehrere Drehstellungen zu ermöglichen, sind im hiesigen Beispiel vier, jeweils um 90° versetzte Nuten **31** im Steckende **30** eingearbeitet. Im zusammengesteckten Zustand sitzt die Nase **25** je nach gewählter Drehstellung der Vertikalstütze **3** in einer der Nuten **31**, und das konische Steckende **30** sitzt stabil in der Konusbohrung **22**. Durch die Nase **25** und die Nuten **31** ist bei ordnungsgemäss eingesetzten Steckhülsen **2** eine exakte Ausrichtung der eingesteckten Vertikalstützen **3** gewährleistet. Eine mühsame Ausrichtung nach optischem Eindruck entfällt, und man erhält eine ordentlich erscheinende Ständerplatte.

## Patentansprüche

1. Ständerplatte zur Warenpräsentation, bestehend aus einer Grundplatte (1), in darin befindlichen Durchgangsbohrungen (10) eingesetzten Steckhülsen (2) und in die Steckhülsen (2) eingesteckten Vertikalstützen (3), wobei die Steckhülsen (2) ein Hülsenstück (20) aufweisen, durch welches sich eine sich abwärts verengende Konusbohrung (22) erstreckt, und wobei an den Vertikalstützen (3) zuunterst ein konisches, in die Konusbohrung (22) eingestecktes Steckende (30) vorgesehen ist, dadurch gekennzeichnet, dass
a) das Hülsenstück (20) äusserlich radial von einem Flansch (21) umgeben ist, der an der Unterseite der Grundplatte (1) angebracht ist, und
b) zuunterst das Hülsenstück (20) einen Hülsenboden (23) mit einer Bohrung (24) aufweist, und
c) innerhalb der Konusbohrung (22), an der Innenwand des Hülsenstücks (20), eine erhabene Nase (25) vorhanden ist, und
d) am Steckende (30) der Vertikalstütze (3) zumindest eine zur Nase (25) komplementäre Nut (31) vorgesehen ist.

2. Ständerplatte nach Anspruch 1, dadurch gekennzeichnet, dass im Flansch (21) Bohrungen (26) zum Durchtritt von Schrauben (27) vorgesehen sind, mittels derer die Steckhülse (2) an der Unterseite der Grundplatte (1) angeschraubt ist.

3. Ständerplatte nach Anspruch 1, **dadurch gekennzeichnet**, dass die im Hülsenboden (**23**) vorhandene Bohrung (**24**) eine Gewindebohrung zur Fixierung eines unter die Grundplatte (**1**) anschraubbaren Fusses (**5**), insbesondere in Rollenform, ist.

4. Ständerplatte nach Anspruch 1, **dadurch gekennzeichnet**, dass am Steckende (**30**) der Vertikalstütze (**3**) vier, jeweils um 90° versetzte, sich abwärts erstreckende Nuten (**31**) vorgesehen sind.

5. Ständerplatte nach Anspruch 1, **dadurch gekennzeichnet**, dass oben an den Vertikalstützen (**3**) Aufsätze (**4**) fixiert sind.

6. Ständerplatte nach Anspruch 5, **dadurch gekennzeichnet**, dass die Aufsätze (**4**) Tragarme (**41**) sind, die von einer Vertikalstütze (**3**) gehaltert werden, oder dass die Aufsätze (**4**) Querstangen (**40**) sind, die von zwei Vertikalstützen (**3**) gehaltert werden.

7. Ständerplatte nach Anspruch 1, **dadurch gekennzeichnet**, dass die den Flansch (**21**) überragende Länge des Hülsenstücks (**20**) der Dicke der Grundplatte (**1**) entspricht.

## Claims

1. Stand plate for exhibiting goods, comprising a base plate (1), plug-in sleeves (2) which are inserted in through-passage bores (10) located in the base plate, and vertical supports (3) which are plugged into the plug-in sleeves (2), it being the case that the plug-in sleeves (2) have a sleeve part (20) through which a downwardly narrowing conical bore (22) extends, and that provided on the vertical supports (3), right at the bottom, is a conical plug-in end (30) which is plugged into the conical bore (22), characterized in that
a) the sleeve part (20) is enclosed externally in the radial direction by a flange (21) which is provided on the underside of the base plate (1), and
b) right at the bottom, the sleeve part (20) has a sleeve base (23) with a bore (24), and
c) a raised nose (25) is provided within the conical bore (22), on the inner wall of the sleeve part (20), and
d) at least one groove (31) which is complementary to the nose (25) is provided at the plug-in end (30) of the vertical support (3).

2. Stand plate according to Claim 1, characterized in that provided in the flange (21) are bores (26) for the through-passage of screws (27) by means of which the plug-in sleeve (2) is screwed on the underside of the base plate (1).

3. Stand plate according to Claim 1, characterized in that the bore (24) provided in the sleeve base (23) is a threaded bore for fixing a foot (5), in particular in roller form, which can be screwed on beneath the base plate (1).

4. Stand plate according to Claim 1, characterized in that four downwardly extending grooves (31), each offset by 90°, are provided at the plug-in end (30) of the vertical support (3).

5. Stand plate according to Claim 1, characterized in that attachments (4) are fixed at the top of the vertical supports (3).

6. Stand plate according to Claim 5, characterized in that the attachments (4) are carrying arms (41) which are secured by a vertical support (3), or in that the attachments (4) are transverse rods (40) which are secured by two vertical supports (3).

7. Stand plate according to Claim 1, characterized in that the length of the sleeve part (20) which projects up beyond the flange (21) corresponds to the thickness of the base plate (1).

## Revendications

1. Plateau à colonnes pour la présentation de marchandises, se composant d'un plateau de base (1), d'alvéoles (2) insérées dans des trous passants (10) se trouvant dans celui-ci, et de montants verticaux (3) engagés dans les alvéoles (2), dans lequel les alvéoles (2) présentent un corps d'alvéole (20) à travers lequel s'étend un trou conique (22) se rétrécissant vers le bas, et dans lequel il est prévu tout en bas sur les montants verticaux (3), un embout conique (30) engagé dans le trou conique (22), caractérisé en ce que
a) le corps d'alvéole (20) est entouré radialement vers l'extérieur par une bride (21), qui est appliquée sur la face inférieure du plateau de base (1), et
b) tout en bas, le corps d'alvéole (20) présente un fond d'alvéole (23) avec un trou (24), et
c) à l'intérieur du trou conique (22), sur la paroi intérieure du corps d'alvéole (20), se trouve un ergot en relief (25), et
4) dans l'embout (30) du montant vertical (3), il est prévu au moins une rainure (31) complémentaire à l'ergot (25).

2. Plateau à colonnes suivant la revendication 1, caractérisé en ce qu'il est prévu, dans la bride (21), des trous (26) pour le passage de vis (27), au moyen desquelles l'alvéole (2) est vissée à la face inférieure du plateau de base (1).

3. Plateau à colonnes suivant la revendication 1, caractérisé en ce que le trou (24) ménagé dans le fond d'alvéole (23) est un trou fileté pour la fixation d'un pied (5), en particulier sous forme de roulette, à visser sous le plateau de base (1).

4. Plateau à colonnes suivant la revendication 1, caractérisé en ce qu'il est prévu, sur l'embout (30) du montant vertical (3), quatre rainures (31) s'étendant vers le bas, chaque fois décalées de 90°.

5. Plateau à colonnes suivant la revendication 1, caractérisé en ce que des accessoires (4) sont fixés en tête des montants verticaux (3).

6. Plateau à colonnes suivant la revendication 5, caractérisé en ce que les accessoires (4) sont des bras porteurs (41), qui sont tenus par un montant vertical (3), ou en ce que les accessoires (4) sont des barres transversales (40), qui sont tenues par deux montants verticaux (3).

7. Plateau à colonnes suivant la revendication 1, caractérisé en ce que la longueur du corps d'alvéole (20) dépassant la bride (21) correspond à l'épaisseur du plateau de base (1).
